# EUROPEAN PATENT APPLICATION

(11) **EP 3 499 666 A1**
(43) Date of publication of application: **19.06.2019**
(21) Application number: 17840694.8
(22) Date of filing: 06.01.2017
(51) Int. Cl.: H02G 3/22

(54) **ULTRA-HIGH VOLTAGE WALL BUSHING WITH SF6 GAS INSULATION**

(30) Priority: 15.08.2016 CN 201610670990
(71) Applicant: Jiangsu Zhida High-Voltage Electrical Co. Ltd., Zhenjiang, Jiangsu 212400 (CN)
(72) Inventor: YU, Yuhao, Zhenjiang Jiangsu 212400 (CN)
(74) Representative: Vitina, Maruta
(86) International application number: PCT/CN2017/070399
(87) International publication number: WO 2018/032716

(57) **Abstract**

Disclosed is an SF6 gas-insulated ultra-high voltage wall bushing, including an external insulation structure and an electrode structure provided in the external insulation structure. The external insulation structure includes an outdoor insulating bushing (1) and an indoor insulating bushing (2) which are coupled through a mounting flange (3). The electrode structure includes a conductive rod (4), an middle electrode (6) and a grounding electrode (5). Each of the outdoor insulating bushing (1) and the indoor insulating bushing (2) has at least two adjacent sub-bushings which are fixed together through transition members. Two ends of the middle electrode (6) are respectively fixed to an outdoor transition plate (10) and an indoor transition plate (13).

## Description

### TECHNICAL FIELD

The present invention relates to an ultra-high voltage wall bushing, and more particularly to an SF6 gas-insulated bushing for live conductors to pass through obstacles such as walls, which is generally installed in a horizontal position.

### BACKGROUND OF THE INVENTION

At present, wall bushings for voltage of 550 kV and above basically include two types of structures: oil-paper capacitor structure and SF6 gas-insulated structure. Generally, composite insulating cylinders or porcelain bushings are used as external insulators.

The wall bushing with oil-paper capacitor typically includes an indoor external insulator, a mounting flange and an outdoor external insulator. A built-in oil-paper capacitor core serves as a main insulator, and the wall bushing is filled with insulating oil. The overall weight of such structure is heavy. When such wall bushing is installed horizontally, there are defects of large moment at the root of the external insulator, low bending strength, leakage and poor operating reliability. Since the indoor and outdoor external insulators are large in size, it is difficult and costly to manufacture the porcelain bushing, for example, the porcelain wall bushing for voltage of 550 kV, the height of which is more than 5 meters at one side.

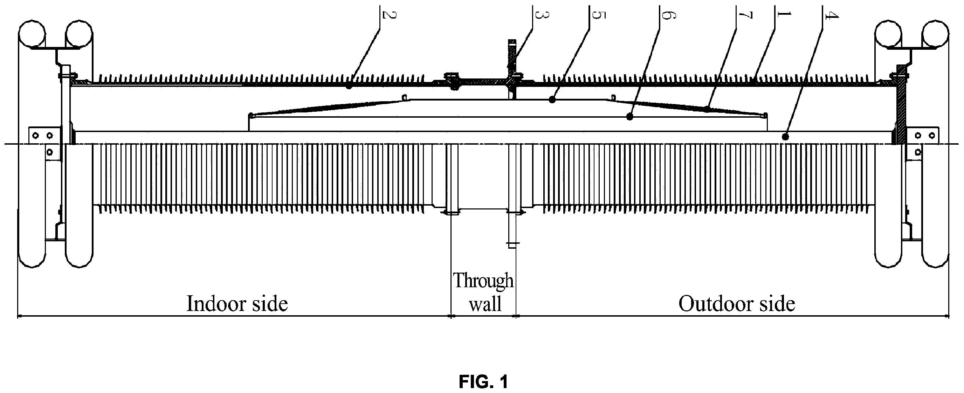

The SF6 gas-insulated wall bushing typically includes an indoor external insulator, a mounting flange and an outdoor external insulator. A coaxial shielding electrode (generally including a middle electrode and a grounding electrode) is arranged between the inner conductive rod and the mounting flange to make the electric field uniformly distributed. The SF6 gas filled in the wall bushing is used as an insulating medium. When such wall bushing is installed horizontally, similarly, there are defects of large moment at the root of the external insulator, low bending strength, leakage, etc. In addition, it is difficult to dispose the support insulator of the middle electrode. FIG. 1 is a schematic diagram of an existing wall bushing with composite external insulator; in the figure, 1, outdoor insulating bushing; 2, indoor insulating bushing; 3, mounting flange; 4, conductive rod; 5, grounding electrode; 6, middle electrode; 7, support insulator.

### SUMMARY OF THE INVENTION

In order to overcome the defects of the prior art, the present application provides an SF6 gas-insulated ultra-high voltage wall bushing. By segmenting the insulating bushing and providing a middle electrode, the present invention improves the potential distribution of external insulators and increases the wet flashover voltage and the pollution flashover voltage, thus improving the safety of device.

An SF6 gas-insulated ultra-high voltage wall bushing includes an external insulation structure and an electrode structure arranged in the external insulation structure. The external insulation structure includes an outdoor insulating bushing and an indoor insulating bushing which are coupled by a mounting flange. The electrode structure includes a conductive rod, a middle electrode and a grounding electrode. Each of the outdoor insulating bushing and the indoor insulating bushing has at least two adjacent sub-bushings which are fixed together by transition members, and two ends of the middle electrode are respectively fixed to an outdoor transition member and an indoor transition member.

In order to solve the above technical problems, the present application further includes the following features.
1. The transition member has a plate-like structure, and the adjacent sub-bushings are respectively fixed at both sides of the transition member by a flange.
2. The transition member is made of a metal material, and a grading ring is arranged on a periphery of the transition member.
3. The sub-bushings are respectively fixed at both sides of the transition member by a flange.
4. The outdoor insulating bushing and the indoor insulating bushing are composite insulating bushings, and the diameter of the sub-bushing away from the mounting flange are smaller than that of the sub-bushing close to the mounting flange.
5. The outdoor insulating bushing and the indoor insulating bushing are porcelain insulating bushings.
6. The grounding electrode is fixed at an inner side of the mounting flange, and the middle electrode is arranged between the conductive rod and the grounding electrode.
7. The external insulation structure is filled with an insulating gas.
8. The insulating gas is sulfur hexafluoride (SF₆).

In the present invention, the indoor and outdoor insulating bushings are separately divided into two sections (or optionally, more than two sections). An external insulator at one side is formed by connecting the two sections through the transition plate. Two external insulators at either side are integrated into a whole by a mounting flange. The two ends of the middle electrode arranged between the conductive rod and the grounding electrode are respectively fixed to the outdoor and indoor transition plates. The installation of middle electrode is simple and highly reliable. The mounting flange in the middle is provided with the grounding electrode. The wall bushing is filled with SF₆ gas at a rated design pressure which is used as an insulating medium.

A coaxial electric field (capacitance: C1) is formed between the conductive rod and the middle electrode, and a coaxial electric field (capacitance: C2) is formed between the middle electrode and the grounding electrode. Through adjustment and optimization of radius r1 of the conductive rod, radius r2 of the middle electrode, radius r3 of the grounding electrode and heights of the middle electrode and the grounding electrode, C1 and C2 are substantially equal. In this way, the potential of the flange in the middle of the two external insulators can be clamped to 0.5 times the Un (rated voltage of device) by dividing the voltage through capacitors, which can significantly improve the potential distribution of the external insulators and improve the wet flashover voltage and the pollution flashover voltage.

After the middle electrode is additionally provided, the electric field strength at surface of the conductive rod can be reduced by nearly half, which significantly improve the electrical performance of the insulator in the wall bushing. The diameter of an upper portion of the external insulating bushing may be much smaller than that of an lower portion of the external insulating bushing. Thus, the weight of the product as well as the wind resistance during operation can be reduced, allowing for safe installation, transportation and operation of the wall bushing. In addition, the manufacturing cost will be significantly reduced, and the amount of the charged SF₆ gas will be greatly reduced.

Compared to conventional ultra-high voltage wall bushing, the present invention improves the internal insulation electrical performance and the flashover voltage, reducing the difficulty in manufacturing insulating bushings. Since the wall bushing can be disassembled and assembled through multi-section insulating bushings, the installation and transportation of the wall bushing become more convenient and safe. The upper and lower portions of the indoor or outdoor external insulator are coupled by means of the transition plate, which makes an improvement on force decomposition when the bending force is applied, as well as on the bending performance and the rigidity of the insulating bushing. Such design, especially for ultra-high voltage wall bushings for voltage of 750kV and above, improves the reliability while reducing the manufacturing costs.

### BRIEF DESCRIPTION OF THE DRAWINGS

FIG. 1 is a schematic diagram of an SF6 gas-insulated ultra-high voltage wall bushing in the prior art.
FIG. 2 is a schematic diagram of an SF6 gas-insulated ultra-high voltage wall bushing of the present invention.

### Reference numerals:

1, outdoor insulating bushing; 2, indoor insulating bushing; 3, mounting flange; 4, conductive rod; 5, grounding electrode; 6, middle electrode; 7, support insulator; 8, upper portion of outdoor external insulating bushing; 9, lower portion of outdoor external insulating bushing; 10, outdoor transition plate; 11, upper portion of indoor external insulating bushing; 12, lower portion of indoor external insulating bushing; 13, indoor transition plate.

### DETAILED DESCRIPTION OF EMBODIMENTS

The present invention will be further described in detail below with reference to the embodiments. However, the invention is not limited to the examples given herein.

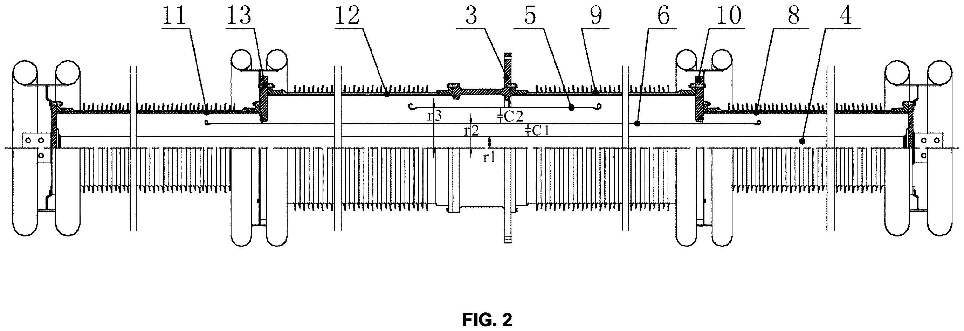

As shown in FIG. 2, this embodiment illustrates an ultra-high voltage wall bushing with a composite external insulator, including an external insulation structure and an electrode structure arranged in the external insulation structure. The external insulation structure includes an indoor insulating bushing and an outdoor insulating bushing which are integrally connected by a mounting flange 3. The electrode structure includes a conductive rod 4, a middle electrode 6 and a grounding electrode 5. The conductive rod 4 is arranged at the center of the external insulation structure. The grounding electrode 5 is mounted on the mounting flange 3. The middle electrode 6 is arranged between the conductive rod 4 and the grounding electrode 5.

The insulating bushing of the present invention adopts a segmented structure. The outdoor insulating bushing and the indoor insulating bushing each have at least two adjacent sub-bushings which are fixed together by a transition member. Specifically, the outdoor insulating bushing of this embodiment is divided into two sections (or optionally, three sections), an upper portion 8 and a lower portion 9 of the outdoor external insulating bushing. The upper portion 8 and the lower portion 9 of the outdoor external insulating bushing are fixed to the outdoor transition plate 10 via a flange at the middle to form an outdoor external insulator at one side of the wall bushing. Correspondingly, the indoor insulating bushing is also divided into two sections, an upper portion 11 and a lower portion 12 of the indoor external insulating bushing. The upper portion 11 and the lower portion 12 of the indoor external insulating bushing are fixed to the indoor transition plate 13 via a flange at the middle to form an indoor external insulator at the other side of the wall bushing. As shown in FIG. 2, an outdoor end of the middle electrode 6 is fixed to an outdoor transition plate 10, and an indoor end of the middle electrode 6 is fixed to an indoor transition plate 13.

The grounding electrode 5 is mounted on the mounting flange 3, and the grounding electrode 5 is equipotential to the mounting flange 3. The two ends of the middle electrode 6 are respectively fixed to the outdoor transition plate 10 and the indoor transition plate 13, such that the middle electrode 6 is equipotential to the flange at the middle of the indoor insulating bushing and the outdoor insulating bushing. The middle electrode, the grounding electrode and the conductive rod are coaxial. When the conductive rod is energized, a coaxial electric field (capacitance: C1) is formed between the conductive rod and the middle electrode, and a coaxial electric field (capacitance: C2) is formed between the middle electrode and the grounding electrode.

By adjusting the diameter of the conductive rod, the inner diameter and height of the middle electrode, the inner diameter and height of the grounding electrode, the capacitance values C1 and C2 are approximately equal. The electric field strength is within the allowable insulation range of by simulation calculation.

For example, the example values by calculation are shown as follows:

| Diameter of conductive rod | Diameter of middle electrode | Height of middle electrode | Diameter of grounding electrode | Height of grounding electrode | C1 | C2 |
|---|---|---|---|---|---|---|
| 180 mm | 385 mm | 5000 mm | 530 mm | 2100 mm | 1316 pF | 1317 pF |

The embodiments are only illustrative of the present application, and are not intended to limit the application. It should be understood that for those of ordinary skills in the art, improvements or variations can be made based on the above descriptions, and such improvements and variations fall within the scope of the appended claims.

## Claims

1. An SF₆ gas-insulated ultra-high voltage wall bushing, comprising an external insulation structure and an electrode structure arranged in the external insulation structure; wherein the external insulation structure comprises an outdoor insulating bushing and an indoor insulating bushing which are coupled by a mounting flange; the electrode structure comprises a conductive rod, a middle electrode and a grounding electrode; **characterized in that** each of the outdoor insulating bushing and the indoor insulating bushing has at least two adjacent sub-bushings which are fixed together by transition members; two ends of the middle electrode are respectively fixed to an outdoor transition member and an indoor member.

2. The SF₆ gas-insulated ultra-high voltage wall bushing according to claim 1, **characterized in that** the transition member has a plate-like structure, and the adjacent sub-bushings are respectively fixed to both sides of the transition member by a flange.

3. The SF₆ gas-insulated ultra-high voltage wall bushing according to claim 2, **characterized in that** the transition member is made of a metal material, and a grading ring is arranged on a periphery of the transition member.

4. The SF₆ gas-insulated ultra-high voltage wall bushing according to claim 2, **characterized in that** the adjacent sub-bushings are respectively fixed on both sides of each transition member by a flange.

5. The SF₆ gas-insulated ultra-high voltage wall bushing according to claim 1, **characterized in that** the outdoor insulating bushing and the indoor insulating bushing are composite insulating bushings, and a diameter of the sub-bushing away from the mounting flange is smaller than the diameter of the sub-bushing close to the mounting flange.

6. The SF₆ gas-insulated ultra-high voltage wall bushing according to claim 1, **characterized in that** the outdoor insulating bushing and the indoor insulating bushing are porcelain insulating bushings.

7. The SF₆ gas-insulated ultra-high voltage wall bushing according to claim 1, **characterized in that** the grounding electrode is fixed in the mounting flange, and the middle electrode is arranged between the conductive rod and the grounding electrode.

8. The SF₆ gas-insulated ultra-high voltage wall bushing according to any one of claims 1 to 7, **characterized in that** the external insulation structure is filled with an insulating gas.

9. The SF₆ gas-insulated ultra-high voltage wall bushing according to claim 8, **characterized in that** the insulating gas is sulfur hexafluoride (SF₆).
